Europäisches Patentamt

European Patent Office

Office européen des brevets

(19)

(11) **EP 1 388 967 A1**

(12) **EUROPÄISCHE PATENTANMELDUNG**

(43) Veröffentlichungstag:
**11.02.2004 Patentblatt 2004/07**

(51) Int Cl.7: **H04L 1/18**

(21) Anmeldenummer: **02017543.6**

(22) Anmeldetag: **06.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **SIEMENS AKTIENGESELLSCHAFT**
**80333 München (DE)**

(72) Erfinder: **Breitbach, Markus, Dr.**
**89081 Ulm (DE)**

(54) **ARQ Verfahren mit adaptiver sendedatenblockposition**

(57) Die Erfindung betrifft ein Verfahren zur Datenübertragung in einem Kommunikationssystem, bei dem ein sendeseitiger Eingangsdatenstrom mit seriell aufeinanderfolgenden Daten über einen zeitvarianten Übertragungskanal übertragen wird.

Der sendeseitige Eingangsdatenstrom wird in einzelne Wörter unterteilt. Anhand von sendeseitigen Modulationsverfahren und Codierungsverfahren wird ein a-priori-Zuverlässigkeitswert für jede Positionen eines Sendedatenblocks ermittelt, wobei die Wörter des Eingangsdatenstroms in Abhängigkeit der a-priori-Zuverlässigkeitswerte entsprechenden Positionen des Sendedatenblocks zugeordnet und übertragen werden. Empfangsseitig wird für jedes Wort des Sendedatenblocks ein a-posteriori-Zuverlässigkeitswert gebildet. Diejenigen Wörter, deren a-posteriori-Zuverlässigkeitswert einen vorgegebenen Mindestwert unterschreiten, werden durch Rückmeldung der entsprechenden Position erneut angefordert und übertragen.

FIG 3

EP 1 388 967 A1

## Beschreibung

Die Erfindung betrifft ein Verfahren zur Datenübertragung in einem Kommunikationssystem, bei dem ein Sendedatenstrom mit seriell aufeinanderfolgenden Daten über einen zeitvarianten Übertragungskanal übertragen wird.

Für Datenübertragungen in einem Kommunikationssystem, im speziellen in einem Funkkommunikationssystem, sind sogenannte Automatic-Repeat-Request-Übertragungsverfahren (ARQ-Übertragungsverfahren) bzw. hybride ARQ-Übertragungsverfahren bekannt, bei denen ein Eingangsdatenstrom mit seriell aufeinanderfolgenden Daten in Datenblöcke unterteilt funkübertragen wird. Dabei wird jedem einzelnen zu übertragenden Datenblock eine Prüfdatenfolge vorangestellt, die empfangsseitig eine Aussage darüber erlaubt, ob ein Datenblock fehlerfrei übertragen wurde oder nicht. Diese Prüfdatenfolge kann beispielsweise als Prüfsumme über den Datenblock oder als CRC-Datenfolge für einen Cyclic-Redundancy-Check ausgeführt sein.

Wird anhand der empfangsseitigen Prüfdatenfolge ein fehlerhafter Datenblock erkannt, so wird der entsprechende Datenblock beim reinen ARQ-Verfahren verworfen und sendeseitig erneut angefordert.

Bei einem hybriden ARQ-Verfahren wird der zuerst übertragene fehlerbehaftete Datenblock zwischengespeichert und sendeseitig erneut angefordert. Im Empfänger werden der erneut angeforderte Datenblock und der zwischengespeicherte Datenblock miteinander kombiniert. Am sich dabei ergebenden Datenblock wird erneut eine Fehlererkennung mit Hilfe der Prüfdatenfolge durchgeführt.

Die erneute Übertragung des Datenblocks erfolgt beim hybriden ARQ-Verfahren entsprechend dem reinen ARQ-Verfahren: der Datenblock wird unverändert und gleichcodiert erneut übertragen. Als Kombinationsverfahren wird das sogenannte "Chase-Combining" verwendet.

Alternativ kann die Übertragung nach dem Verfahren der "Incremental-Redundancy" erfolgen. Dabei wird die Codierung des erneut zu übertragenden Datenblocks geändert. Dadurch wird am Empfänger zusätzliche Redundanz zur Fehlerkorrektur zur Verfügung gestellt. Die Kombination des gespeicherten und des erneut übertragenen Datenblocks erfolgt durch das sogenannte "Code-Combining".

Bei Funkkommunikationssystemen besteht die Notwendigkeit, eine Datenübertragungsrate mit hohem Datendurchsatz optimal und dynamisch an Eigenschaften eines Funkübertragungskanals anzupassen, die im allgemeinen durch statistische Schwankungen und Störungen innerhalb des Funkübertragungskanals zeitlich veränderlich (zeitvariant) sind. Bei einer Erhöhung der Datenübertragungsrate wächst jedoch das Risiko einer fehlerhaften Datenübertragung durch Annäherung an die Kapazitätsgrenze des Funkübertragungskanals an.

Die aus den zeitvarianten Funkübertragungskanälen resultierenden Probleme sind beispielsweise aus den Mobilfunkstandards GSM, UMTS, HiperLAN, usw. bekannt und sind besonders durch starke Leistungsschwankungen bei einem Empfangssignal sowie durch diesem überlagertes, störendes Rauschen durch einen empfangsseitig angeordneten Empfangsverstärkers geprägt.

Dabei sind die Leistungsschwankungen abhängig vom Standort und von der Bewegung eines Mobilteilnehmers.

Als weitere zeitvariante Übertragungskanäle sind auch Telefonleitungen für ADSL-Verbindungen, Kabel für Kabelfernsehen und Glasfaserkabel anzusehen.

Zu übertragende Datenblöcke werden mit Hilfe von Redundanzverfahren, Fehlervorwärts-Korrekturverfahren oder mit Hilfe einer speziellen Fehlererkennungscodierung gegen Übertragungsfehler abgesichert. Jedoch wird dabei ein Nutzdatenanteil innerhalb eines zu übertragenden Datenblocks entsprechend reduziert.

Während also bei einem Übertragungskanal mit schlechten Übertragungseigenschaften ein hoher Anteil an Redundanzdaten im Datenblock notwendig wird, ist bei Übertragungskanälen mit guten Übertragungseigenschaften (mit einer typischen Bitfehlerrate BER $< 10^{-5}$ ) bereits eine Prüfsumme zur Fehlererkennung ausreichend, wodurch hier ein maximaler Nutzdatenanteil erreicht wird.

Beim hybriden ARQ-Verfahren wird ein empfangsseitiges Signal-Rauschverhältnis SNR durch das Kombinationsverfahren soweit verbessert, dass ein fehlerfreier Empfang ermöglicht wird. Ein Nachteil des hybriden ARQ-Verfahrens ist jedoch darin zu sehen, dass durch die wiederholte Übertragung ganzer Datenblöcke nur eine grobe Abstufung der Datenrate und damit nur eine grobe Anpassung an die Eigenschaften des Funkübertragungskanals ermöglicht wird. Dabei sind zur Zwischenspeicherung von fehlerbehafteten Datenblöcken empfangsseitig große Speicherkapazitäten vorzusehen. Durch die erneute Anforderung und Übertragung von fehlerbehafteten Datenblöcken kommt es zu Verzögerungen im Datenfluss bzw. wird ein effektiver Nutzdatendurchsatz verringert.

Es ist daher Aufgabe der vorliegenden Erfindung, ein Verfahren zur Datenübertragung zu entwickeln, bei dem einerseits empfangsseitig Speicherkapazität reduziert wird und andererseits der effektive Nutzdatendurchsatz erhöht wird.

Die Aufgabe der Erfindung wird durch die Merkmale des Anspruchs 1 gelöst. Vorteilhafte Weiterbildungen der Erfindung sind in den Unteransprüchen angegeben.

Bei der vorliegenden Erfindung wird ein Eingangsdatenstrom, der seriell aufeinanderfolgende Bits bzw. Symbolen aufweist, in einzelne Wörter unterteilt. Die einzelnen Wörter werden bei einer späteren Übertragung auf Codesymbole bzw. auf Modulationssymbole abgebildet, wobei jedes einzelne Wort eines oder mehrere Bits beinhaltet.

Aus den einzelnen Wörtern des Eingangsdatenstroms wird ein zur (Funk-) Übertragung bestimmter Sendedatenblock gebildet. Für jede Position, die ein Wort innerhalb des Sendedatenblocks einnehmen kann, ist ein a-priori-Zuverlässigkeitswert ermittelbar, der sich aus Eigenschaften eines sendeseitig verwendeten Codierungs- bzw. Modulationsverfahrens ergibt. Dieser a-priori-Zuverlässigkeitswert beschreibt eine zu erwartende Fehlerwahrscheinlichkeit bei der Übertragung eines entsprechenden Wortes an der betreffenden Position. Die Zuordnung der einzelnen Wörter zu den einzelnen Positionen innerhalb des Sendedatenblocks erfolgt anhand der a-priori-Zuverlässigkeitswerte der jeweiligen Positionen.

Ein zuerst zu übertragendes Wort wird einer ersten Position mit einem maximalen a-priori-Zuverlässigkeitswert im Sendedatenblock zugeordnet. Ein an zweiter Stelle zu übertragendes Wort wird einer zweiten Position mit einem zweithöchsten a-priori-Zuverlässigkeitswert zugeordnet, usw. Das zuletzt zu übertragende Wort wird einer letzten Position im Sendedatenblock mit einem minimalen a-priori-Zuverlässigkeitswert zugeordnet.

Im Sendedatenblock sind den zu übertragenden Wörtern des Eingangsdatenstroms ansteigende Positionen mit abfallenden a-priori-Zuverlässigkeitswerten zugeordnet.

Empfangsseitig wird für jedes empfangene Wort des Sendedatenstroms ein a-posteriori-Zuverlässigkeitswert gebildet, der als Parameter für die Fehlerwahrscheinlichkeit des Wortes dient und mit einem vorgegebenen Mindestwert verglichen wird. Beispielsweise erfolgt die Bildung des empfangsseitigen a-posteriori-Zuverlässigkeitswerts mit Hilfe einer Softoutput-Decodierung wie der Trellis-Decodierung. Bei dieser Decodierung werden Soft-Output-Informationen verwendet, um für jedes einzelne Wort eine a-posteriori-Wahrscheinlichkeit zu bestimmen, ob das Wort richtig oder fehlerbehaftet empfangen wurde (z.B. Soft-Output-Viterbi-Algorithmus nach Hagenauer).

Unterschreitet der empfangsseitige a-posteriori-Zuverlässigkeitswert eines i-ten Wortes an einer zugeordneten i-ten Position des Sendedatenstrom den Mindestwert, so wird das i-te Wort als fehlerhaft betrachtet und sendeseitig eine erneute Übertragung derjenigen Wörter angefordert und durchgeführt, die einen geringeren a-priori-Zuverlässigkeitswert als das i-te Wort aufweisen und somit im Sendedatenstrom Positionen POS $\geq$ i einnehmen. Die Anforderung erfolgt dabei effektiv und einfach durch Rückmeldung der entsprechenden i-ten Position des fehlerhaft erkannten Wortes von der Empfangsseite zur Sendeseite.

Auf der Sendeseite wird die Rückmeldung der i-ten Position so interpretiert, dass die ersten i-1 Wörter des Sendedatenblocks mit den Positionen 1 bis i-1 fehlerfrei empfangen wurden, wodurch sich deren erneute Übertragung erübrigt. Diejenigen Wörter, die an den Positionen POS $\geq$ i übertragen wurden, sind hingegen als fehlerhaft zu betrachten, werden sendeseitig erneut angefordert und mit Hilfe eines neu gebildeten Sendedatenblocks erneut übertragen. Beim neu gebildeten Sendedatenblock wird der ersten Position nun das i-te Wort des zuvor übertragenen Sendedatenblocks zugewiesen.

Abweichend zum hybriden ARQ-Verfahren werden somit beim Auftreten eines Übertragungsfehlers sendeseitig nicht komplette Sendedatenblöcke erneut angefordert und übertragen, sondern es werden lediglich diejenigen Wörter sendeseitig erneut angefordert, die einem empfangsseitig vorgegebenen Mindestwert nicht entsprechen.

Durch das erfindungsgemäße Verfahren wird empfangsseitig Speicherkapazität eingespart.

Durch die erfindungsgemäße Lokalisierung von fehlerbehafteten Worten innerhalb eines Datenblocks und durch deren ausschließliche erneute Übertragung wird der effektive Nutzdatendurchsatz erhöht.

Durch die Rückmeldung der ersten Position wird nur ein minimaler zusätzlicher Signalisierungsaufwand für einen Rückkanal benötigt.

Das erfindungsgemäße Verfahren ist bei den unterschiedlichsten (Funk-) Übertragungsverfahren bzw. (Funk-) Kommunikationssystemen anwendbar. Dabei ist es besonders bei Mobilfunksystemen aufgrund der zeitselektiven Funkkanaleigenschaften einsetzbar.

Durch das erfindungsgemäße Verfahren werden Datenübertragungsraten stets optimal an die Eigenschaften des Übertragungskanals angepasst.

Durch das erfindungsgemäße Verfahren werden die fehlerbehafteten Worte anhand ihres Zuverlässigkeitswertes als zusammenhängende Gruppe im Datenblock zusammengelegt und sind durch die Positionen entsprechend adressierbar bzw. als ganze Gruppe abrufbar.

Im Folgenden wird ein Ausführungsbeispiel der Erfindung anhand einer Zeichnung näher erläutert. Dabei zeigt:

FIG 1    ein Blockschaltbild einer Anordnung für ein Verfahren zur Datenübertragung gemäß dem Stand der Technik,

FIG 2    ein Blockschaltbild einer Anordnung für ein erfindungsgemäßes Verfahren zur Datenübertragung,

FIG 3    die Bildung eines in FIG 2 dargestellten Sendedatenstroms,

FIG 4    eine empfangsseitige Auswertung des in FIG 3 dargestellten Sendedatenstroms, und

FIG 5    ein Anwendungsbeispiel des erfindungsgemäßen Verfahrens zur Datenübertragung bei einem sendeseitig verwendeten 16QAM-Modulationsverfahren.

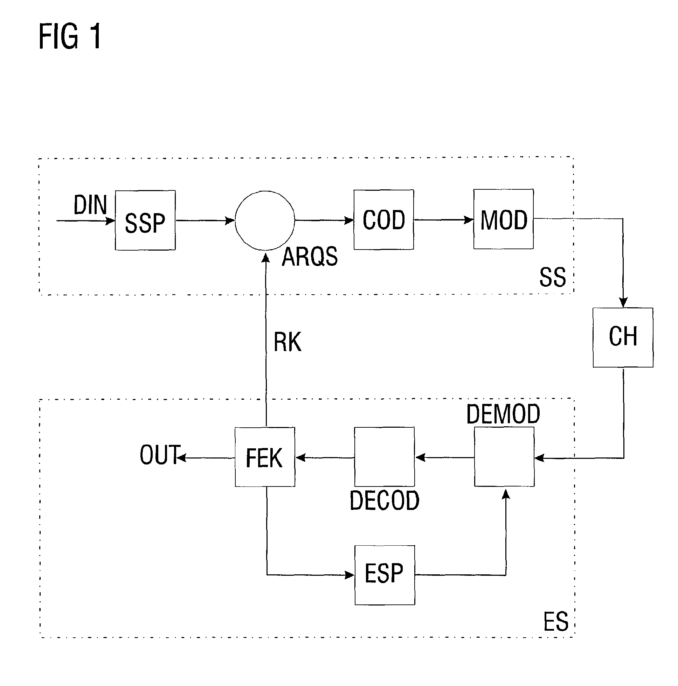

FIG 1 zeigt ein Blockschaltbild einer Anordnung für ein Verfahren zur Datenübertragung gemäß dem Stand der Technik.

Beim hier dargestellten hybriden ARQ-Verfahren ("Automatic-Repeat-Request", ARQ) gelangen zu Datenblöcken DIN zusammengefasste Eingangsdaten sendeseitig (SS) über einen Sendespeicher SSP, der zur Zwischenspeicherung der Datenblöcke dient, an eine Einrichtung zur ARQ-Steuerung ARQS. Die Datenblöcke DIN werden mit Hilfe einer Codiereinrichtung COD codiert und jeweils mit einer Prüfsumme zur Fehlererkennung, den sogenannten Parity-Check-Bits, versehen. Nachfolgend werden die Datenblöcke mit Hilfe einer Modulationseinrichtung MOD moduliert und über einen zeitvarianten Übertragungskanal CH übertragen.

Empfangsseitig (ES) werden die übertragenen Datenblöcke mit Hilfe einer Demodulationseinrichtung DEMOD demoduliert, mit Hilfe einer Decodiereinrichtung DECOD decodiert und einer Einrichtung zur Fehlererkennung FEK zugeführt. Dort wird für jeden Datenblock die entsprechend zugeordnete Prüfsumme überprüft. Wird ein Fehler im zugeordneten, übertragenen Datenblock festgestellt, so wird der entsprechende Datenblock einerseits mit Hilfe eines Empfangsspeichers ESP zwischengespeichert und andererseits über einen Rückkanal RK sendeseitig erneut angefordert.

Der angeforderte Datenblock wird erneut übertragen und mit dem empfangsseitig zwischengespeicherten Datenblock kombiniert. Dazu wird beispielsweise ein Maximum-Ratio-Combining-Verfahren oder ein Code-Combining-Verfahren verwendet. Am Ergebnis der Combining-Verfahren wird eine Fehlerkorrektur durchgeführt, die in der Decodiereinrichtung DECOD erfolgt. Als fehlerfrei bewertete Datenblöcke gelangen zu ihrer weiteren Verarbeitung an einen Ausgang OUT.

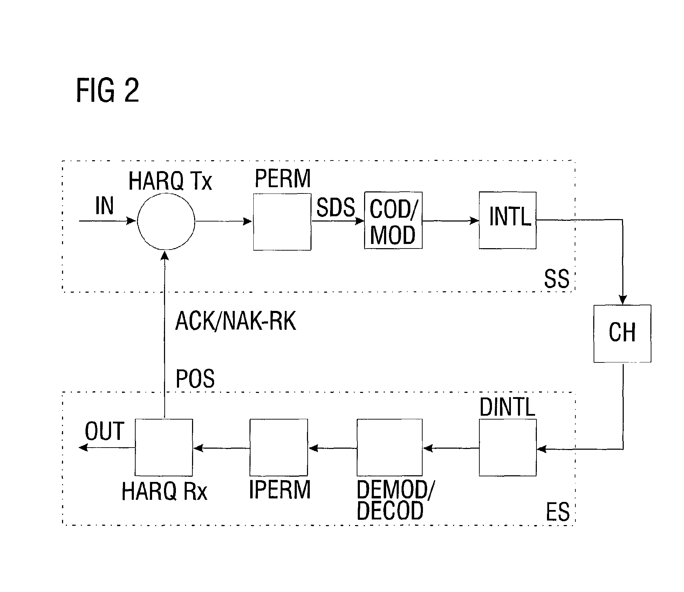

FIG 2 zeigt ein Blockschaltbild einer Anordnung für ein erfindungsgemäßes Verfahren zur Datenübertragung bei einem UMTS-Funkkommunikationssystem.

Ein Eingangsdatenstrom IN mit seriell aufeinanderfolgenden Bits bzw. Symbolen wird sendeseitig (SS) in einer Sendesteuereinrichtung HARQ-Tx, die einen High-Speed-Downlink-Packet-Access repräsentiert, in Worte unterteilt. Anschließend werden so viele Worte, wie in einem Sendedatenstrom SDS Platz finden werden, einer Permutationseinrichtung PERM zugeführt.

In der Permutationseinrichtung PERM wird aus den einzelnen Wörtern des Eingangsdatenstroms IN ein zur (Funk-) Übertragung bestimmter Sendedatenblock SDS gebildet. Für jede Position, die ein Wort innerhalb des Sendedatenblocks SDS einnehmen kann, ist ein a-priori-Zuverlässigkeitswert ermittelbar, der von einem sendeseitig verwendeten Codierungs- bzw. Modulationsverfahren abhängig ist. Dieser a-priori-Zuverlässigkeitswert beschreibt eine zu erwartende Fehlerwahrscheinlichkeit bei der Übertragung eines entsprechenden Wortes an der betreffenden Position. Die Zuordnung der einzelnen Wörter zu den einzelnen Positionen innerhalb des Sendedatenblocks erfolgt anhand der a-priori-Zuverlässigkeitswerte der jeweiligen Positionen mit Hilfe der Permutationseinrichtung PERM.

Ein zuerst zu übertragendes Wort wird einer ersten Position mit einem maximalen a-priori-Zuverlässigkeitswert im Sendedatenblock SDS zugeordnet. Ein an zweiter Stelle zu übertragendes Wort wird einer zweiten Position mit einem zweithöchsten a-priori-Zuverlässigkeitswert zugeordnet, usw. Das zuletzt zu übertragende Wort wird einer letzten Position im Sendedatenblock SDS zugeordnet.

Der Sendedatenblock SDS mit den erfindungsgemäß geordneten Wörtern gelangt beim Funkkommunikationssystem über eine Einrichtung zur Codierung und Modulation COD/MOD an eine Interleaving-Einrichtung INTL zur Durchführung eines Interleaving-Verfahrens. Dabei gebildete Datenblöcke werden über einen zeitvarianten Übertragungskanal CH, der spezifische Funkkanaleigenschaften aufweist, funkübertragen.

Empfangsseitig werden die funkübertragenen Datenblöcke einer Deinterleaving-Einrichtung DINTL zur Durchführung eines Deinterleaving-Verfahrens zugeführt und mit Hilfe einer Einrichtung zur Demodulation und Decodierung DEMOD/DECOD wiederum demoduliert bzw. decodiert, wodurch der Sendedatenblock empfangsseitig zurück gewonnen wird. Dabei ergeben sich a-posteriori-Zuverlässigkeitswerte, die als Parameter für die Fehlerwahrscheinlichkeit der empfangsseitig gewonnenen Worte dienen. Beispielsweise erfolgt die Bildung der empfangsseitigen a-posteriori-Zuverlässigkeitswerte mit Hilfe einer Trellis-Decodierung oder mit Hilfe einer anderen Softoutput-Decodierung.

Mit Hilfe einer inversen Permutationseinrichtung IPERM werden die empfangenen Wörter derart umgeordnet, dass ihre Reihenfolge der des ursprünglichen Eingangsdatenstroms IN entspricht.

Anschließend wird der für jedes empfangene Wort gebildete a-posteriori-Zuverlässigkeitswert mit einem vorgegebenen Mindestwert verglichen.

Ein i-tes Wort wird als fehlerhaft erachtet, wenn dessen a-posteriori-Zuverlässigkeitswert den Mindestwert unterschreitet. Über eine Empfangssteuereinrichtung HARQ-Rx wird die dem i-ten Wort zugeordnete i-te Position mit Hilfe eines Rückkanals ACK/NAK-RK an die Sendeseite SS gemeldet. Sendeseitig wird ein neuer Sendedatenblock gebildet, dessen erster Position nun das i-te Wort zugeordnet wird, das empfangsseitig als fehlerhaft erachtet wurde. Weitere Positionen des neu gebildeten Sendedatenblocks werden mit den ebenfalls als "fehlerhaft übertragen" betrachteten Wörtern i+1 und folgende des zuvor übertragenen Sendedatenblocks entsprechend belegt.

Die erfolgende Zuordnung von Wörtern zu Positionen anhand der Zuverlässigkeitswerte sind sowohl sende- als auch empfangsseitig bekannt.

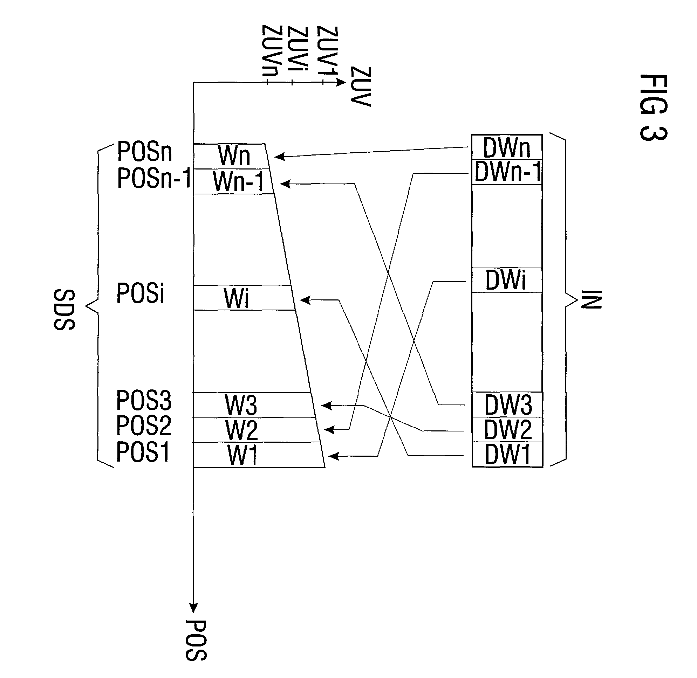

FIG 3 zeigt eine Bildung eines in FIG 2 dargestellten Sendedatenblocks SDS aus einem Eingangsdatenstrom IN.

Der Eingangsdatenstrom IN weist insgesamt n Wörter DW1 bis DWn auf.

Zur Bildung des Sendedatenblocks SDS werden die einzelnen Wörter DW1 bis DWn des Eingangsdatenstroms IN anhand von a-priori-Zuverlässigkeitswerten Positionen POS des Sendedatenblocks SDS zugeordnet.

Für jede Position POS, die ein Wort innerhalb des Sendedatenblocks SDS einnehmen kann, ist der a-priori-Zuverlässigkeitswert ZUV1 bis ZUVn ermittelbar, der von einem sendeseitig verwendeten Codierungs- bzw. Modulationsverfahren abhängig ist.

Ein i-tes Wort DWi des Eingangsdatenstroms IN wird einer ersten Position POS1 des Sendedatenblocks SDS mit einem maximalen Zuverlässigkeitswert ZUV1 zugeordnet und bildet ein erstes Wort W1 des Sendedatenblocks SDS. Ein n-tes Wort DWn wird einer n-ten Position POSn des Sendedatenblocks SDS mit einem minimalen Zuverlässigkeitswert ZUVn zugeordnet und bildet ein n-tes Wort Wn des Sendedatenblocks SDS, usw.

Bei einer Übertragung des Sendedatenblocks SDS wird zuerst das erste Wort W1 an der Position POS1 übertragen. Es ergibt sich somit ein zu übertragender Sendedatenblock SDS, dessen aufsteigenden Positionen POS1 bis POSn mit abfallenden Zuverlässigkeitswerten ZUV1 bis ZUVn jeweils Wörter W1 bis Wn zugeordnet sind.

Zur weiteren Verbesserung bei der Übertragung können Prüfsummen und empfangsseitige Kombinationsverfahren zusätzlich verwendet werden. Durch das erfindungsgemäße Verfahren wird dabei stets eine Fehlerlokalisierung innerhalb eines Sendedatenblocks ermöglicht, während gleichzeitig ein maximaler Nutzdatenanteil ermöglicht wird.

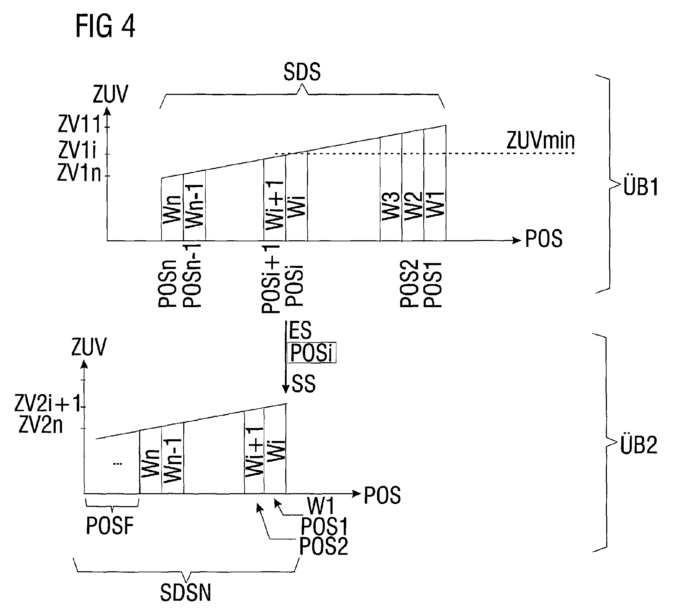

FIG 4 zeigt eine empfangsseitige Auswertung des in FIG 3 dargestellten Sendedatenblocks SDS.

Empfangsseitig wird für jedes einzelne Wort W1 bis Wn des Sendedatenblocks einer ersten Übertragung ÜB1 ein a-poster-iori-Zuverlässigkeitswert ZV11 bis ZV1n bestimmt, der als jeweiliger Parameter für die Fehlerwahrscheinlichkeit des Wortes W1 bis Wn dient.

Für das erste Wort W1 an der ersten Position POS1 wird ein maximaler a-posteriori-Zuverlässigkeitswert ZV11 bestimmt, während für das n-te Wort Wn an der n-ten Position POSn ein minimaler Zuverlässigkeitswert ZV1n bestimmt wird.

Abweichend zum hier dargestellten Beispiel sind die a-posteriori-Zuverlässigkeitswerte nicht zwingend monoton fallend, da sie von zufälligen Störungen im Funkkanal abhängig sind.

Ein i-tes Wort Wi an einer i-ten Position POSi weist einen Zuverlässigkeitswert ZV1i auf, der einen vorgegebenen Mindestwert ZUVmin erstmalig unterschreitet. Das i-te Wort Wi wird als fehlerhaft betrachtet und die Position POSi an die Sendeseite SS zurückgemeldet.

Es wird für eine neue Übertragung ÜB2 ein neuer Sendedatenblock SDSN gebildet, dessen erster Position POS1 das Wort Wi der ersten Übertragung ÜB1 zugeordnet wird. Geordnet nach dem beschriebenen Verfahren schließen sich die Wörter Wi+1 bis Wn an entsprechend anschließenden Positionen POS2 usw. an. Freie Positionen POSF des neu gebildeten Sendedatenblocks SDSN werden mit neuen Wörtern des Eingangsdatenstroms IN aufgefüllt.

Somit werden sendeseitig alle Wörter Wi bis Wn, die bei der ersten Übertragung ÜB1 die Positionen POSi bis POSn belegten, nach Anforderung erneut übertragen.

Wird bei der ersten Übertragung ÜB1 bei einem empfangsseitigen i-ten Wort Wi davon ausgegangen, dass dessen Fehlerwahrscheinlichkeit zu groß war, so wäre die Fehlerwahrscheinlichkeit bei weiteren übertragenen Worten Wi+1 bis Wn noch größer und damit eine erneute Übertragung ÜB2 der Worte Wi bis Wn sinnvoll.

Die Wörter W1 bis Wn der ersten Übertragung ÜB1 und die Wörter Wi bis Wn der zweiten Übertragung ÜB2 werden einer Fehlerkorrektur zugeführt.

Indem das i-te Wort Wi der ersten Übertragung ÜB1 bei der zweiten Übertragung ÜB2 nun an erster Stelle des Sendedatenblocks SDSN steht, wird durch das erfindungsgemäße Verfahren ein Incremental-Redundancy-Combining realisiert, da systembedingt die Codierung der im zu übertragenden Sendedatenblock SDSN enthaltenen Wörter geändert wird. Eine zusätzliche Redundanz bei der Übertragung wird dadurch mit einfachen Mitteln realisiert.

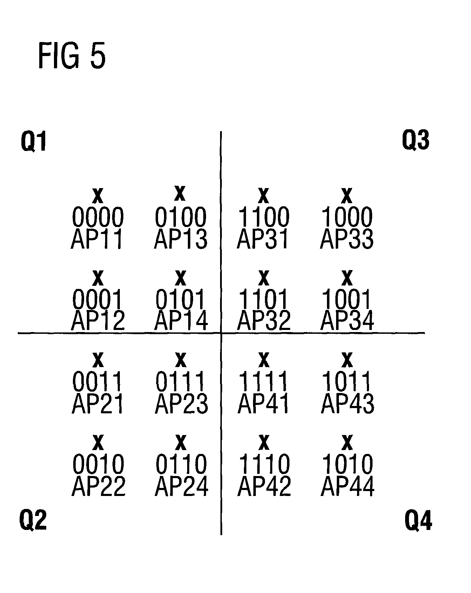

FIG 5 zeigt ein Anwendungsbeispiel des erfindungsgemäßen Verfahrens zur Datenübertragung bei einem sendeseitig verwendeten 16QAM-Modulationsverfahren.

Beim hier dargestellten und für die Funkübertragung gewählten 16QAM-Modulationsverfahren werden den 16 möglichen Punkten X, adressierbar durch je 4 Bits, jeweils Amplitudenwerte AP11 bis AP44 zugeordnet.

Dabei werden die Bits a1 bis a4 der Amplitudenwerte AP11 bis AP14 eines ersten Quadranten Q1 derart gewählt, dass deren erstes Bit a1=0 und deren drittes Bit a3=0 ist. Somit ergibt sich für vier mögliche Amplitudenwerte AP11 bis AP14 des ersten Quadranten Q1: 0x0x.

Entsprechend gilt:

- für die vier Amplitudenwerte AP21 bis AP24 des zweiten Quadranten Q2: 0x1x,
- für die vier Amplitudenwerte AP31 bis AP34 des dritten Quadranten Q3: 1x0x , und
- für die vier Amplitudenwerte AP41 bis AP44 des vierten Quadranten Q4: 1x1x.

Störungen der Amplitudenwerte AP11 bis AP14 des ersten Quadranten Q1, die beispielsweise zu fehlerhaft empfangenen Amplitudenwerten AP21 bis AP24 des zweiten Quadranten Q2 führen würden, sind aufgrund ihrer Größe unwahrscheinlich, weshalb die jeweilgen ersten und dritten Bits a1 und a3 eines betrachteten Amplitudenwerts als sicherer angesehen werden können als die zweiten und vierten Bits a2 und a4 desselben Amplitudenwerts.

Betrachtet man jedes einzelne Bit als ein Wort, so weisen die ersten und dritten Wörter einer Folge von Amplitudenwerten einen hohen Zuverlässigkeitswert auf.

Im folgenden soll dies an einem Beispiel verdeutlicht werden. Eine Eingangsdatenfolge IN bestehe aus 8 Bit bzw. Wörtern wie folgt:

$$IN = (s1,s2,s3,s4,s5,s6,s7,s8)$$
$$= (1, 1, 1, 1, 0, 0, 0, 0)$$

Sendeseitig wird anhand der Zuverlässigkeitswerte folgende Zuordnung zwischen Wörtern (Bits) und Positionen des Sendedatenstroms SDS getroffen:

| m-tes Bit im Eingangsdatenstrom IN | Position in SDS |
|---|---|
| 1 | PS11 |
| 2 | PS21 |
| 3 | PS13 |
| 4 | PS23 |
| 5 | PS12 |
| 6 | PS22 |
| 7 | PS14 |
| 8 | PS24 |

Mit SS1 = (PS11, PS12, PS13, PS14) = (s1,s5,s3,s7) und
mit SS2 = (PS21, PS22, PS23, PS24) = (s2,s6,s4,s8)

ergibt sich ein Sendedatenblock SDS mit entsprechend den Positionen zugeordneten Bits zu:

$$SDS = (SS1, SS2) = (1, 0, 1, 0, 1, 0, 1, 0)$$

mit SS1 = (1, 0, 1, 0) und SS2 = (1, 0, 1, 0).

Über den Sendedatenblock SDS wird eine Prüfsumme PSS (Parity-Check) gemäß folgender Vorschrift gebildet:

$$PSS = (PS11 \oplus PS21, PS12 \oplus PS22, PS13 \oplus PS23, PS14 \oplus PS24)$$

$$PSS = (0, 0, 0, 0)$$

mit $\oplus$ als binärer Addition der Bits an den entsprechenden Positionen PS.

Die Prüfsumme PSS wird dem Sendedatenblock SDS vorangestellt und übertragen, es ergibt sich dann:

$$SDS(Tx) = (PSS, SS1, SS2)$$
$$= (0, 0, 0, 0, 1, 0, 1, 0, 1, 0, 1, 0).$$

In Amplitudenwerten ausgedrückt gilt für den übertragenen Sendedatenblock SDS (Tx):

$$SDS\ (Tx) = (AP11, AP44, AP44)$$

Im Folgenden wird angenommen, dass empfangsseitig ein Sendedatenblock SDSE empfangen wurde:

$$SDSE = (PSE, RE1, RE2)$$

mit:

$$PSE = AP11 = (0,0,0,0)$$

$$RE1 = AP44 = (PR11,PR12,PR13,PR14) = (1,0,1,0)$$

$$RE2 = AP43 = (PR21,PR22,PR23,PR24) = (1,0,1,1)$$

Darin sei das Bit bzw. Wort PR24 fehlerhaft.

Empfangsseitig wird nun ebenfalls eine Prüfsumme PSC gemäß folgender Vorschrift gebildet:

$$PSC = (PR11 \oplus PR21, PR12 \oplus PR22, PR13 \oplus PR23, PR14 \oplus PR24) = (0,0,0,1)$$

Der Prüfsummenvergleich PSE $\neq$ PSC zeigt einen Fehler innerhalb des empfangenen Sendedatenblocks SDSE auf, jedoch lässt sich nicht entscheiden, ob das Bit an der Position PR14 oder an der Position PR24 fehlerhaft ist. Zu betrachten bleibt nun die Bitfolge (RE1, RE2).

Anhand folgender Zuordnungstabelle werden nun Positionen von unzuverlässigen Bits festgestellt, indem die sendeseitig vorgenommene Zuordnung rückgängig gemacht wird:

| Position in der Bitfolge (RE1,RE2) | i-te Position in einer neu gebildeten Bitfolge ERG |
|:---:|:---:|
| PR1 | 1 |
| PR21 | 2 |
| PR13 | 3 |
| PR23 | 4 |
| PR12 | 5 |
| PR22 | 6 |
| PR14 | 7 |
| PR24 | 8 |

Es ergibt sich nach der rückgängig gemachten Zuordnung eine neu gebildete Bitfolge ERG:

$$ERG = (1, 1, 1, 1, 0, 0, 0, 1) = (r1,r2,r3,r4,r5,r6,r7,r8)$$

Unter der Annahme, dass aufgrund des beim Prüfsummenvergleich detektierten Fehlers die a-posteriori-Zuverlässigkeitswerte der Positionen PR14 und PR24 den Mindestwert unterschreiten, werden die entsprechend zugeordneten und als fehlerhaft betrachteten Wörter r7 und r8 der Bitfolge ERG von der Sendeseite erneut angefordert.

Die siebte Position wird mit i=7 Position an die Sendeseite übertragen. Somit wurden die sendeseitigen Wörter s1 bis s6 fehlerfrei übertragen und die Wörter s7 und s8 werden erneut angefordert.

**Patentansprüche**

1. Verfahren zur Datenübertragung,

   - bei dem ein sendeseitiger Eingangsdatenstrom (IN) in einzelne Wörter unterteilt wird,
   - bei dem anhand von sendeseitigen Modulationsverfahren und Codierungsverfahren a-priori-Zuverlässigkeitswerte (ZUV1,... ,ZUVn) für Positionen (POS) eines Sendedatenblocks (SDS) ermittelt werden,
   - bei dem die Wörter des Eingangsdatenstroms (IN) in Abhängigkeit der a-priori-Zuverlässigkeitswerte (ZUV1,... ,ZUVn) entsprechenden Positionen (POS) des Sendedatenblocks (SDS) zugeordnet und übertragen werden,
   - bei dem empfangsseitig für jedes Wort des Sendedatenblocks (SDS) ein a-posteriori-Zuverlässigkeitswert (ZV11,...,ZV1n) gebildet wird, und
   - bei dem diejenigen Wörter mit einem einen Mindestwert (ZUVmin) unterschreitenden a-posteriori-Zuverlässigkeitswert (ZV11,...,ZV1n) sendeseitig erneut angefordert und übertragen werden.

2. Verfahren nach Anspruch 1,

   - bei dem ein Wort (DWi) des Eingangsdatenstroms (IN), das einer ersten Position (POS1) des Sendedatenblocks (SDS) mit einem maximalen a-priori-Zuverlässigkeitswert (ZUV1) zugeordnet ist, zuerst übertragen wird, und
   - bei dem ein Wort (DWn) des Eingangsdatenstroms (IN), das einer n-ten Position (POSn) des Sendedatenblocks (SDS) mit einem minimalen a-priori-Zuverlässigkeitswert (ZUVn) zugeordnet ist, zuletzt übertragen wird.

3. Verfahren nach Anspruch 1 oder 2,

   - bei dem empfangsseitig im Sendedatenblock (SDS) ein i-tes Wort (Wi) an einer i-ten Position (POSi) ermittelt wird, dessen a-posteriori-Zuverlässigkeitswert (ZV1i) den Mindestwert (ZUVmin) erstmalig unterschreitet, und
   - bei dem die i-te Position (POSi) des i-ten Worts an die Sendeseite übermittelt wird.

4. Verfahren nach Anspruch 3,

   - bei dem sendeseitig ein neuer Sendedatenblock (SDSN) für eine erneute Übertragung (ÜB2) gebildet wird, dessen erste Position (POS1) dem i-ten Wort (Wi) der vorhergehenden Übertragung (ÜB1) zugeordnet wird,
   - bei dem beim neuen Sendedatenblock (SDSN) der ersten Position (POS1) nachfolgende Positionen (POS2,..., POSn) mit denjenigen Wörtern (Wi+1,...,Wn) der vorhergehenden Übertragung (ÜB1) entsprechend belegt werden, die bei der vorhergehenden Übertragung (ÜB1) Positionen (POSi+1, ...,POSn) belegten, die größer als die i-te Position (POSi) waren.

5. Verfahren nach Anspruch 3 oder 4, bei dem die i-te Position mit Hilfe eines Rückübertragungskanals von der Empfangsseite zur Sendeseite übermittelt wird.

6. Verfahren nach einem der vorhergehenden Ansprüche, bei dem fehlerhaft erachtete Wörter (Wi,...,Wn) einer ersten Übertragung (ÜB1) empfangsseitig abgespeichert und mit den erneut übertragenen Wörtern (Wi,...,Wn) einer zweiten Übertragung (ÜB2) mit Hilfe eines Maximum-Ratio-Combining-Verfahrens oder eines Code-Combining-Verfahrens kombiniert werden.

7. Verfahren nach einem der vorhergehenden Ansprüche, bei dem die empfangsseitigen a-posteriori-Zuverlässigkeitswerte (ZV11,...,ZV1n) mit Hilfe einer Softoutput-Decodierung ermittelt werden.

8. Verfahren nach Anspruch 7, bei dem die empfangsseitigen a-posteriori-Zuverlässigkeitswerte (ZV11,...,ZV1n) mit Hilfe einer Trellis-Decodierung ermittelt werden.

9. Verfahren nach einem der vorhergehenden Ansprüche, bei dem der Sendedatenblock (SDS) mit Hilfe eines PSK- oder eines 16QAM- oder eines höherstufigen Modulationsverfahrens moduliert übertragen wird.

10. Verfahren nach einem der vorhergehenden Ansprüche, bei dem dem Sendedatenblock (SDS) eine Prüfsumme oder ein CRC-Datenblock zur Fehlererkennung vorangestellt wird.

FIG 1

FIG 2

FIG 3

# FIG 4

## FIG 5

|  |  |  |  |
|---|---|---|---|
| **Q1** | | | **Q3** |

|  |  |  |  |
|---|---|---|---|
| X<br>0000<br>AP11 | X<br>0100<br>AP13 | X<br>1100<br>AP31 | X<br>1000<br>AP33 |
| X<br>0001<br>AP12 | X<br>0101<br>AP14 | X<br>1101<br>AP32 | X<br>1001<br>AP34 |
| X<br>0011<br>AP21 | X<br>0111<br>AP23 | X<br>1111<br>AP41 | X<br>1011<br>AP43 |
| X<br>0010<br>AP22 | X<br>0110<br>AP24 | X<br>1110<br>AP42 | X<br>1010<br>AP44 |

|  |  |  |  |
|---|---|---|---|
| **Q2** | | | **Q4** |

Europäisches
Patentamt

**EUROPÄISCHER RECHERCHENBERICHT**

Nummer der Anmeldung

EP 02 01 7543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 208 663 B1 (SCHRAMM PETER ET AL) 27. März 2001 (2001-03-27) * Spalte 6, Zeile 22 - Zeile 32 * * Spalte 7, Zeile 1 - Zeile 13 * * Spalte 7, Zeile 29 - Zeile 38 * * Spalte 8, Zeile 3 - Zeile 33 * * Spalte 8, Zeile 38 - Zeile 42; Abbildungen 4-6 * --- | 1 | H04L1/18 |
| A | US 6 247 150 B1 (NIEMELA KARI) 12. Juni 2001 (2001-06-12) * Spalte 4, Zeile 22 - Zeile 31 * * Spalte 4, Zeile 42 - Zeile 53 * * Spalte 5, Zeile 57 - Zeile 66 * * Spalte 6, Zeile 51 - Zeile 62 * * Spalte 7, Zeile 7 - Zeile 20 * --- | 1 | |
| A | US 5 793 983 A (HOLT II ROBERT EDWARD ET AL) 11. August 1998 (1998-08-11) * Spalte 12, Zeile 24 - Spalte 13, Zeile 8; Anspruch 1; Abbildung 9 * ----- | 1 | |

| RECHERCHIERTE SACHGEBIETE (Int.Cl.7) |
|---|
| H04L |

Der vorliegende Recherchenbericht wurde für alle Patentansprüche erstellt

| Recherchenort | Abschlußdatum der Recherche | Prüfer |
|---|---|---|
| DEN HAAG | 18. Februar 2003 | Papantoniou, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 7543

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 6208663 | B1 | 27-03-2001 | AU | 751651 B2 | 22-08-2002 |
| | | | AU | 9012198 A | 22-03-1999 |
| | | | BR | 9811429 A | 22-08-2000 |
| | | | CA | 2301945 A1 | 11-03-1999 |
| | | | CN | 1277766 T | 20-12-2000 |
| | | | EP | 1010287 A1 | 21-06-2000 |
| | | | WO | 9912303 A1 | 11-03-1999 |
| | | | TW | 390076 B | 11-05-2000 |
| US 6247150 | B1 | 12-06-2001 | FI | 981544 A | 04-01-2000 |
| | | | AU | 732801 B2 | 03-05-2001 |
| | | | AU | 4912299 A | 24-01-2000 |
| | | | CN | 1273725 T | 15-11-2000 |
| | | | EP | 0993713 A1 | 19-04-2000 |
| | | | WO | 0002341 A1 | 13-01-2000 |
| | | | JP | 2002520904 T | 09-07-2002 |
| | | | NO | 20001076 A | 02-03-2000 |
| US 5793983 | A | 11-08-1998 | JP | 9204373 A | 05-08-1997 |

EPO FORM P0461

Für nähere Einzelheiten zu diesem Anhang : siehe Amtsblatt des Europäischen Patentamts, Nr.12/82